## Europäisches Patentamt
## European Patent Office
## Office européen des brevets

(19)

(11) Veröffentlichungsnummer: **0 132 601**
**B1**

(12) # EUROPÄISCHE PATENTSCHRIFT

(45) Veröffentlichungstag der Patentschrift:
20.11.86

(51) Int. Cl.⁴: **B 61 H  15/00,** B 61 H  5/00,
F 16 D  65/56

(21) Anmeldenummer: **84107270.5**

(22) Anmeldetag: **25.06.84**

(54) **Bremsgestänge für Fahrzeugreibungsbremsen.**

(30) Priorität: **21.07.83  DE 3326374**

(43) Veröffentlichungstag der Anmeldung:
**13.02.85 Patentblatt 85/7**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**BE - A - 408 402**
**CH - A - 96 127**
**DE - A - 2 346 828**
**DE - B - 1 200 343**
**DE - B - 1 240 116**
**DE - C - 811 242**
**DE - C - 824 650**
**DE - C - 937 291**
**DE - U - 7 006 455**
**FR - A - 1 051 931**
**GB - A - 845 806**

(73) Patentinhaber: **KNORR-BREMSE AG, Moosacher
Strasse 80 Postfach 401060, D-8000 München 40 (DE)**

(72) Erfinder: **Persson, Erling Roland, Konsertvägen 7,
S-24500 Staffanstorp (SE)**

## Beschreibung

Die Erfindung bezieht sich auf ein Bremsgestänge für Fahrzeugreibungsbremsen mit einem zwischen zwei Bremsgestängeteilen eingeordneten, von der durch einen Bremskraftmotor ausübbaren Bremszuspannkraft auf Zug oder Druck belastbaren, längenveränderlichen Lüftspielnachsteller, insbesondere Bremszange für Schienenfahrzeug-Scheibenbremsen mit als Lüftspielnachsteller ausgebildeter Zugstange, mit den im Gattungsbegriff des Patentanspruches 1 angegebenen Merkmalen.

Ein derartiges Bremsgestänge mit raschem und energiesparendem Bremsenanlegen zu Bremsbeginn vermittels des Hilfskraftmotors ist aus der BE-A-408 402 bekannt. Das Schraubgetriebe ist hierbei spannschlossartig mit zwei gegenläufige Gewinde aufweisenden Gewindespindeln ausgebildet, deren jede an einem Bremshebel undrehbar angelenkt ist. Beide Gewindespindeln sind mit miteinander verbundenen Muttern verschraubt, die gemeinsam über ein Kegelradgetriebe antreibbar sind. Das antreibende Kegelrad ist einerseits über die Reibungskupplung vom drehbar auf seiner Achse gelagerten Drehhebel antreibbar und ist andererseits über die als eine ihm zugeordnete Trommelfläche umschlingende Schraubenfeder ausgebildete Einwegkupplung zu einem feststehenden Gehäuse kuppelbar. Der Einwegkupplung ist eine vom Drehhebel nockengesteuerte, als Drehanschlag ausgebildete Schaltvorrichtung zugeordnet, welche die Einwegkupplung nur in einem dem Bremsenlüfthub entsprechenden Drehbereich des Drehhebels zur Wirkung gelangen lässt, ansonsten ausschaltet. Das Kegelradgetriebe, der mehrachsige Antriebsaufbau und die Gehäuselagerung bedingen beachtlichen Bau- und Montageaufwand.

Ähnliche Bremsgestänge sind mit als getrennte Druckluftzylinder ausgebildetem Bremskraftmotor und Hilfskraftmotor, allerdings nur für eine Klotzbremseinheit für Schienenfahrzeuge geeignet, aus der GB-A-845 806 und, mit einem gemeinsamen Druckluftzylinder für sowohl den Bremskraftmotor als auch den Hilfskraftmotor und für Bremszangen für Schienenfahrzeug-Scheibenbremsen und auch Klotzbremseinheiten geeignet, aus der DE-A-2 346 828 bekannt. Beim Bremsgestänge nach der GB-A-845 806 ist zum Zuspannen der Fahrzeugreibungsbremse ein vom als Bremskraftmotor dienenden Druckluftzylinder bewegbares Exzentergetriebe vorgesehen, dessen Lagerstelle über den Lüftspielnachsteller verstellbar ist. Der Lüftspielnachsteller weist ein vom als Hilfskraftmotor dienenden Druckluftzylinder über ein als Einwegkupplung dienendes Ratschengetriebe verschraubbares Schraubgetriebe mit einer Gewindespindel und einer auf dieser verschraubten Mutter auf. Der als Bremskraftmotor dienende Druckluftzylinder wird unmittelbar von in ihrem Druck entsprechend der gewünschten Bremsstärke geregelter Druckluft beaufschlagt, überschreitet der Kolben dieses Druckluftzylinders während Bremsungen eine bestimmte Hubstrecke, so überschleift dieser Kolben eine Öffnung, welche zum Beaufschlagungsraum des als Hilfskraftmotor dienenden Druckluftzylinders führt, so dass nunmehr auch dieser von der Brems-Druckluft beaufschagt wird, sich im Leergang gegen Federkraft verschiebt und bei nachfolgendem Brems-Druckluftabbau während des Bremslösevorganges eine Nachstellung des Lüftspiels der Reibungsbremse bewirkt. Bei diesem Bremsgestänge muss der grossquerschnittige, als Bremskraftmotor dienende Druckluftzylinder über das Bremsgestänge mit dessen Übersetzung sowohl einen das Bremsen-Lüftspiel wie das Bremsen-Zuspannen bewirkenden Hub ausführen, dieser Hub ist daher relativ gross, so dass dieser Bremszylinder gross ausgebildet werden muss, ein entsprechendes Bauvolumen benötigt und während Bremsvorgängen eine entsprechend grosse, nicht rückgewinnbare Druckluftmenge, d.h. Energiemenge, zum Zuspannen der Reibungsbremse benötigt. Ausserdem ist nur eine gestufte, in Abhängigkeit vom Hub des Bremskraft-Druckluftzylinders auslösbare Nachstellung des Lüftspiels der Reibungsbremse gegeben, so dass bei Änderung des Bremsgestänge-Übersetzungsverhältnisses, wie es oftmals zur Anpassung des Bremsgestänges an die jeweils mit diesem auszurüstenden Fahrzeuge erforderlich ist, auch die Lage der überschleifbaren Kanalöffnungen im Bremskraft-Druckluftzylinder verlegt werden muss, also ein andersartiger, derartiger Druckluftzylinder benötigt wird.

Nach der vorstehend bereits erwähnten DE-A-2 346 828 ist zwischen die Enden zweier Bremszangen-Bremshebel ein als Bremskraftmotor dimensionierter Druckluftzylinder eingeordnet und der Abstand zwischen diesen beiden Bremszangen-Bremshebelenden wird von einem Bowdenzug abgetastet und über eine spielbehaftete Anschlagvorrichtung als Drehantrieb eines Ratschengetriebes auf eine Gewindespindel übertragen, welche als Zugstange für die Bremszange dient. Mit gegenläufigen Gewindeabschnitten der Gewindespindel sind zwei Muttern verschraubt, welche in den mittleren Bereichen der beiden Bremszangen-Bremshebel angelenkt sind. Auch hier muss der grosse Druckluftzylinder sowohl das Lüftspiel wie den Zuspannhub für die Scheibenbremse bewirken, es ist nur eine gestufte Lüftspielnachstellung möglich und das jeweilige Übersetzungsverhältnis der Bremszange nimmt Einfluss auf die Nachstellsteuerung.

Bei beiden vorstehend beschriebenen, bekannten Bremsgestängen erfolgt also voreilend zur Betätigung des Bremskraftmotors kein rasches und energiesparendes Anlegen der Fahrzeugreibungsbremsen.

Zum raschen und energiesparenden Bremsenanlegen ist es gemäss der DE-C-824 650 bekannt, in das durch den Bremskraftmotor bewegbare Bremsgestänge ein durch einen Hilfskraftmotor streckbares Kniehebelgestänge einzuordnen; ein Lüftspielnachsteller ist hierbei nicht vorgesehen. Die Wirkung des Kniehebelgestänges wird vom Übersetzungsverhältnis des Bremsgestänges beeinflusst, so dass es entsprechend dem jeweiligen Bremsgestänge-Übersetzungsverhältnis zu dimensionieren ist. In das Bremsgestänge könnte zwar ein Lüftspielnachsteller eingeordnet werden, doch würde hierdurch der Bauaufwand des Bremsgestänges wesentlich vergrössert.

Aus der DE-B-937 291 und DE-C-1 200 343 sind Bremsgestänge bekannt, welche von einem Bremskraftmotor bewegbar sind und welche durch Kupplungen schaltbare Schraubgetriebe aufweisen, welche in Abhängigkeit vom Spannungszustand im Bremsgestänge oder in Abhängigkeit von konstruktiv festgelegten Bremskraftmotor-Hüben gesteuert, das Bremsgestänge von einer niedrigen, ein rasches Bremsenanlegen bewirkenden Übersetzung auf eine hohe, eine grosse Bremszuspannkraft bewirkende Übersetzung umschalten. Diese Bremsgestänge weisen jedoch einen aufwendigen Aufbau mit mehreren Gewindespindeln, Muttern, Kupplungen und zwei Zugstangen im H-Gestänge bzw. eine Anschlagkupplung in bremskraftübertragenden Gestängezug auf, sie bieten zudem keine Möglichkeit, den Anlegehub der Reibungsbremsen mittels eines kleinen, gesonderten Hilfskraftmotors zu überwinden.

Weiterhin ist aus der DE-C-1 240 116 ein Bremsgestänge mit gesonderten Bremskraft- und Hilfskraftmotor bekannt, welche zu Bremsbeginn durch ein Ventil gesteuert druck- und damit zeitversetzt zueinander aus der gleichen Bremsdruckleitung druckbeaufschlagbar sind. Die vom Bremskraftmotor und vom Hilfskraftmotor ausgehenden Gestängezeige sind dabei über eine selbsttätige Kupplung nach Zurücklegen des Anlegehubes miteinander kuppelbar, der Hilfskraftmotor muss daher auch den Festspannhub für die Reibungsbremse ausführen; zum selbsttätigen Justieren des Bremslüftspiels muss im Bremsgestänge noch ein gesonderter Gestängenachsteller vorgesehen werden, wodurch das Bremsgestänge aufwendig und teuer wird.

Aus der DE-C-811 242 sind für Bremsen mit Anlege- und Festbremszylinder viele unterschiedliche Anordnungen bekannt, mit welchen sichergestellt werden kann, dass der Festbremszylinder beim Bremsen erst nach dem Bremsenanlegen druckbeaufschlagt und beim Lösen ebenfalls eine geeignete Reihenfolge der Entlüftungsvorgänge erfolgt.

Für Lüftspielnachsteller in Bremsgestängen ist es prinzipiell bekannt, als drehmomentübertragende Einwegkupplung mit radialer Vorspannung auf Zylinderflächen sitzende, wenigstens annähernd spielfrei gewickelte Schraubenfedern zu verwenden, die aus im Querschnitt rechteckigem Stahldraht gewickelt sein können.

Für Bremsgestänge mit über einen Drehhebel antreibbarer Bremswelle, welche ihrerseits vermittels eines Schraub- oder Nockengetriebes die Bremszuspannung bewirkt, ist es beispielsweise aus dem DE-U-7 006 455 bekannt, den Drehhebel über ein in Drehrichtung zum Bremsen sperrendes Einweggetriebe und eine parallel zum Einweggetriebe angeordnete, als Klemmring ausgebildete Reibungskupplung mit der Bremswelle zu koppeln. Eine weitere, kräftigere und ebenfalls als Reibring ausgebildete Reibungskupplung ist in Serie zu einem Drehanschlag mit einem den Soll-Lüftspiel entsprechendes Spiel zwischen die Bremswelle und ein drehfest gehaltenes Teil eingeordnet. Es ist jedoch keine Vorrichtung zum raschen, energiesparenden Bremsenanlegen zu Bremsbeginn vorhanden.

Als Bremskraftmotor und Hilfskraftmotor werden zumeist Druckluftzylinder verwendet, hierzu sind jedoch auch hydraulische, elektromagnetische und elektromotorische Vorrichtungen bekannt.

Es ist Aufgabe der Erfindung, ein Bremsgestänge der eingangs angegebenen Art zu schaffen, welches bei kleinem Raumbedarf einen einfachen Aufbau aufweist, der zudem den jeweiligen Anforderungen leicht anpassbar ist. Insbesondere für den Bremskraftmotor und den Hilfskraftmotor sollen nur kleine Hubwege benötigt werden, wie aus der erwähnten BE-A-408 402 bereits bekannt ist, so dass diese Motoren klein ausbildbar und energiesparend betreibbar sind, wobei hub- und energieverzehrende Spiele und Schalthübe im Bremsgestänge vermeidbar sind, dabei jedoch stets ein exaktes Einstellen des Soll-Lüftspiels möglich und bei entsprechender Ausbildung des Lüftspiel-Nachstellers auch gewährleistet ist. Weiterhin soll in einfacher Weise eine Parkbremse vorsehbar sein, welche in ebenfalls baulich einfacher Weise mit einer Schnell-Löseeinrichtung ausstattbar sein soll.

Diese Aufgabe wird nach der Erfindung durch die Kombination der im kennzeichnenden Teil des Patentanspruches 1 angegebenen Merkmale gelöst.

Die Patentansprüche 2 bis 5 kennzeichnen nach der weiteren Erfindung zweckmässige Ausgestaltungsmöglichkeiten für das Bremsgestänge, insbesondere dessen Lüftspielnachsteller.

Zum beispielsweise bei Belagwechsel erforderlichen Rückstellen des Bremsgestänges geben die Patentansprüche 6 bis 10 vorteilhafte Ausbildungsmöglichkeiten an. Nach den Ansprüchen 11 und 12 kann in einfacher Weise eine Parkbremse vorsehen werden, für welche sich nach den Merkmalen der Ansprüche 7 bis 10 und 13 eine einfache und leicht bedienbare, mechanische Schnellöseeinrichtung ergibt. Die Ansprüche 14 bis 17 kennzeichnen weitere, zweckmässige Ausbildungsmöglichkeiten für das Bremsgestänge.

In der Zeichnung sind Ausführungsbeispiele für nach der Erfindung ausgebildete Bremsgestänge dargestellt und zwar zeigt

Fig. 1 ein als Bremszange für eine Scheibenbremse ausgebildetes Bremsgestänge in verkleinertem Massstab,

Fig. 2 eine Ansicht der Zugstange der Bremszange,

Fig. 3 einen Schnitt gemäss Linie III-III durch die Zugstange nach Fig. 2,

Fig. 4 bis 6 Einzelheiten der Zugstange nach Fig. 3 in vergrössertem Massstab,

Fig. 7 eine Stirnansicht der Zugstange nach Fig. 2 mit der Anlenkvorrichtung für den Hilfskraftmotor,

Fig. 8 eine abgewandelte Ausführungsform der Zugstange und

Fig. 9 eine Ansicht der Zugstange nach Fig. 8.

Gleiche Bezugszahlen beziehen sich in den Zeichnungen auf jeweils gleiche oder einander entsprechende Bauteile.

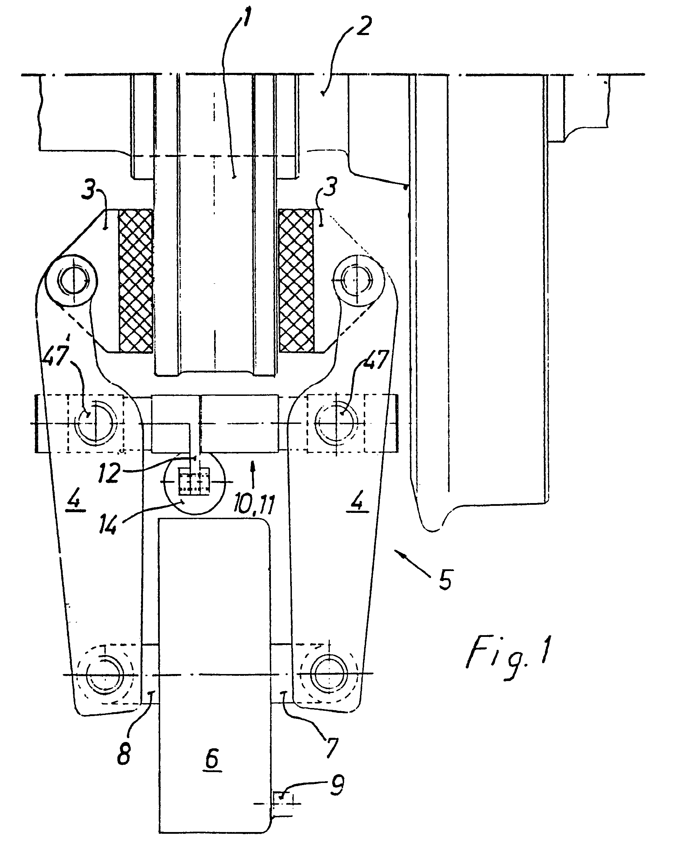

In Fig. 1 ist ein Teil eines mit einer Bremsscheibe 1 ausgestatteten Schienenfahrzeug-Radsatzes 2 dargestellt. An die Bremsscheibe 1 sind von beiden Seiten Bremsbacken 3 anpressbar, welche an den Enden der Bremszangen-Bremshebel 4 eines als Bremszange 5 ausgebildeten Bremsgestänges angelenkt sind. An ihren anderen Enden sind die beiden Bremszangenhebel 4 an einem mit dem Zylinderkörper eines Bremszylinders 6 verbundenen Lagerauge 7 bzw. der Kolbenstange 8 des Bremszylinders 6 angelenkt. Der einen Bremskraftmotor darstellende und entsprechend dimensionierte Bremszylinder 6 ist im Fahrzeug in üblicher Weise fest oder schwimmend gehalten, er ist über einen Rohranschluss 9 mit entsprechend der gewünschten Bremsstärke geregelter Bremsdruckluft zum Ausfahren der Kolbenstange 8 beaufschlagbar.

In ihren mittleren Bereichen zwischen ihren beidseitigen Endanlenkungen sind die beiden Bremszangen-Bremshebel 4 durch eine als Lüftspielnachsteller 10 ausgebildete Zugstange 11 miteinander gelenkig verbunden. Der Lüftspiel-Nachsteller 10 weist zu seiner Betätigung einen radial auskragenden Drehhebel 12 auf.

Insoweit entspricht das Bremsgestänge der Bremsbetätigung einer Scheibenbremse gemäss der bereits erwähnten DE-A-2 346 828 und braucht daher nicht weiter erläutert zu werden.

Das Ende des Drehhebels 12 ist über einen sich im wesentlichen senkrecht zur Zeichenebene nach Fig. 1 erstreckenden Hebel 13 mit der Kolbenstange eines Druckluftzylinders 14 verbunden; der Druckluftzylinder 14 ist wesentlich kleiner als der Bremszylinder 6 dimensioniert und stellt einen Hilfskraftmotor dar. Der Druckluftzylinder 14 ist über eine in Fig. 1 nicht dargestellte Rohrleitung an die ebenfalls nicht gezeigte, die Bremsdruckluft führende Rohrleitung parallel zum Rohranschluss 9 angeschlossen. Sowohl der Druckluftzylinder 14 wie der Bremszylinder 6 sind mit einer nicht dargestellten Rückdruckfeder ausgestaltet, welche die Kolben dieser Zylinder in unbeaufschlagtem Zustand in eine Ruhe-Endstellung verschieben und dort festhalten; diese Kolbenrückdruckfedern sind derart dimensioniert, dass bei von Atmosphärendruck ausgehend anwachsendem Druck der Bremsdruckluft sich zuerst der Kolben des Druckluftzylinders 14 verschiebt und erst nach Abschluss dieser Bewegung, also bei Erreichen eines höheren Druckes der Bremsdruckluft, sich der Kolben des Bremszylinders 6 in Bewegung setzt.

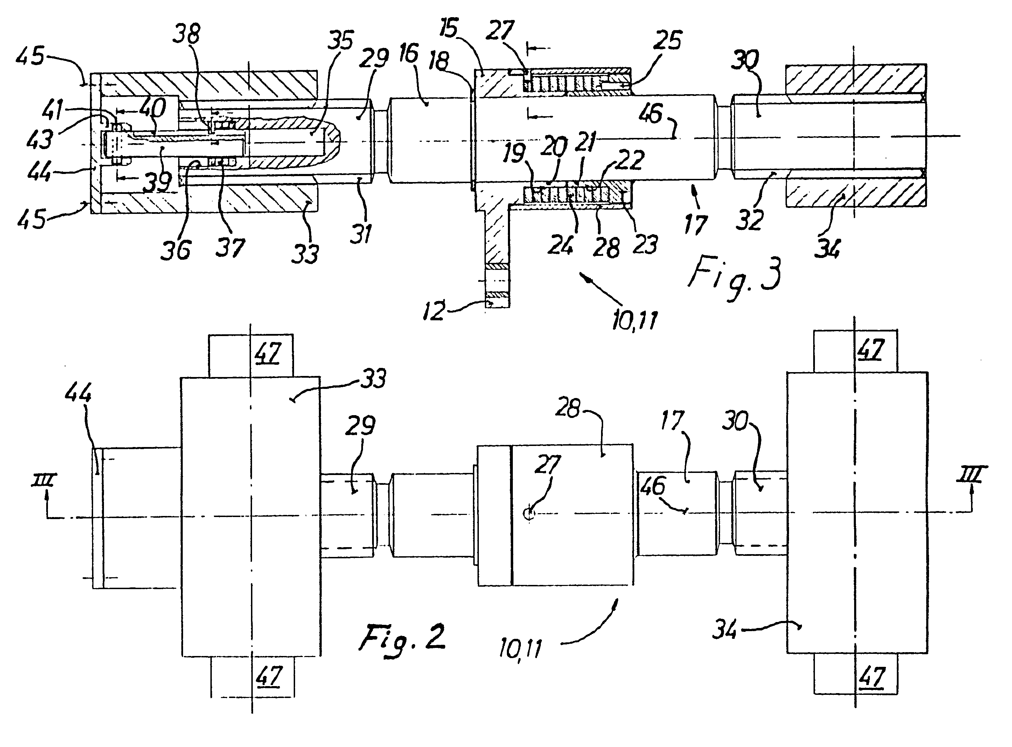

Aus Fig. 2 und 3 ist ersichtlich, dass der Lüftspielnachsteller 10 die Zugstange 11 bildet. Der Drehhebel 12 ist mittels eines Lagerauges 15 drehbar auf einem zylindrischen Abschnitt 16 einer Gewindespindel 17 gelagert; ein in den Abschnitt 16 eingelassener Sicherungsring 18 sichert das Lagerauge 15 gegen axiale Verschiebungen gemäss Fig. 3 nach links. Andererseits ist das Lagerauge 15 mit einem eine äussere Zylinderfläche 19 aufweisenden Ansatz 20 versehen, der stirnseitig zur Sicherung gegen axiale Verschiebungen an einem mit dem Abschnitt 16 fest verbundenen Hülsenteil 21 anliegt; das Hülsenteil 21 weist anschliessend an die Zylinderfläche 19 eine Zylinderfläche 22 gleichen Durchmessers auf, welche etwa die gleiche axiale Erstreckung wie die Zylinderfläche 19 besitzt, und endet mit einem Ringflansch 23.

Auf den Zylinderflächen 19 und 22 sitzt mit radial nach innen gerichteter Vorspannung eine sich vom Lagerauge 15 bis zum Ringflansch 23 erstreckende Schraubenfeder 24, welche aus im Querschnitt rechteckförmigem Stahldraht wenigstens annähernd spielfrei gewickelt ist. Das dem Ringflansch 23 zugewandte Ende der Schraubenfeder 24 ist mit dem Ringflansch 23 durch einen Stift 25 verbunden; der im Ringflansch 23 gehaltene Stift 25 kann in eine Ausnehmung der Schraubenfeder 24 nahe ihres Endes eingreifen oder auch einfach die stirnseitige Endfläche des Wickeldrahtes der Schraubenfeder übergreifen. Abweichend hierzu könnte das Ende der Schraubenfeder 24 rechtwinklig abgebogen und durch Eingreifen in eine Bohrung des Ringflansches 23 oder des Hülsenteiles 21 gehaltert sein.

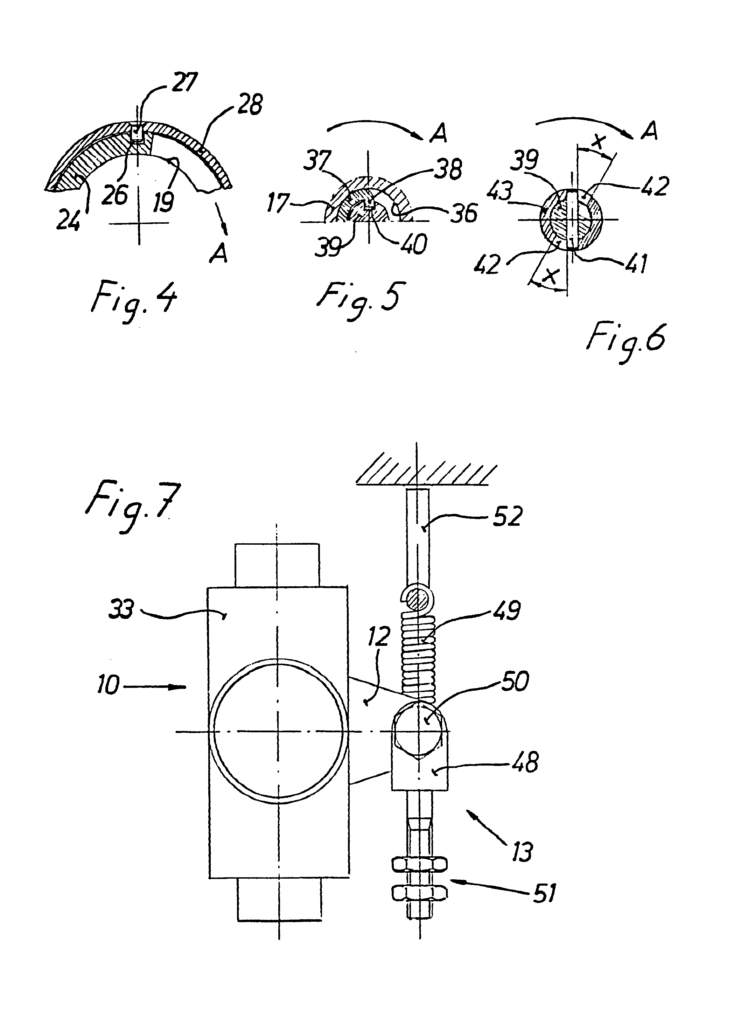

Nahe seines anderseitigen Endes ist der Stahldraht der Schraubenfeder 14 mit einer vom Schraubenfeder-Aussenumfang ausgehenden Quernut 26 versehen, in welche von radial aussen ein Stift 27 eingreift, der an einer Hülse 28 gehaltert ist, die sich vom Lagerauge 15 bis zum Ringflansch 23 erstreckt und auf diesen beiden Teilen drehbar gelagert ist; die Hülse 28 stellt eine willkürlich drehbare Dreheinrichtung dar, mittels welcher das dem Lagerauge 15 zugewandte Ende der Schraubenfeder 24 willkürlich verdrehbar ist, während das andere Ende der Schraubenfeder 24 drehfest mit der Gewindespindel 17 gekoppelt ist. In Fig. 4 ist in vergrössertem Massstab die Verbindung der Hülse 28 vermittels des Stiftes 27 mit der Schraubenfeder 24 im Schnitt dargestellt.

Die Gewindespindel 17 weist an ihren beiden Enden Gewindeabschnitte 29, 30 auf, welche mit zueinander gegenläufigen Gewinden 31, 32 versehen sind. Mit dem gemäss Fig. 3 linksseitigen Gewindeabschnitt 29 ist eine Mutter 33 und mit dem rechtsseitigen Gewindeabschnitt 30 eine Mutter 34 verschraubt. Im Bereich des Gewindeabschnittes 29 weist die Gewindespindel 17 eine Ausnehmung 35 mit einer innenzylindrischen Zylinderfläche 36 als Wandung auf. An der Zylinderfläche 36 liegt mit Vorspannung nach radial aussen eine Schraubenfeder 37 an, welche ebenfalls wenigstens annähernd spielfrei aus im Querschnitt rechteckigem Stahldraht gewickelt ist; die Schraubenfeder 37 ist jedoch wesentlich kleiner und schwächer ausgebildet als die Schraubenfeder 24. Das dem Ende der Gewindespindel 17 zugewandte Ende der Schraubenfeder 37 ist mit einer nach radial innen gerichteten Abkröpfung 38 versehen. In die Ausnehmung 35 greift axial verschieblich ein ein Zwischenteil bildender Stift 39 ein, welcher mit einer Längsnut 40 versehen ist, in welche die Abkröpfung 38 verschieblich eingreift. In Fig. 5 ist das Eingreifen der Abkröpfung 38 in die Längsnut 40 in vergrössertem Massstab dargestellt. Der Innendurchmesser der Schraubenfeder 37 weist ein geringes, radiales Spiel zum Aussendurchmesser des Stiftes 39 auf. Der Stift 39 ist an seinem Ende aus der Gewindespindel 17 herausragenden Ende mit einem Querstift 41 versehen, dessen den Stift 39 überragende Enden mit einem bestimmten Drehspiel x in Quernuten 42 an einem den Stift 39 übergreifenden Hülsenansatz 43 einer die Mutter 33 an ihrem die Gewindespindel 17 überragenden Ende schliessenden, deckelartigen Endkappe 44 eingreifen. In Fig. 6 ist das Eingreifen des Querstiftes 41 in die Längsnut 40 mittels eines vergrösserten Schnittbildes durch den Stift 39 und den Hülsenansatz 43 dargestellt. Die Endkappe 44 ist durch bei 45 angedeutete Verschraubungen fest mit der Mutter 33 verbunden. Der anderseitige Gewindeabschnitt 30 sowie die zugeordnete Mutter 34 sind einfach, ohne Ausnehmung 35, Schraubenfeder 37, Stift 39 bzw. Hülsenansatz 43 ausgebildet.

Die Gewindespindel 17 stellt mit den beiden Muttern 33 und 34 ein Schraubgetriebe dar, vermittels dessen durch Drehen der Gewindespindel 17 der gegenseitige Abstand der beiden Muttern 33 und 34 veränderbar ist.

Die beiden Muttern 33 und 34 tragen aussen je zwei gleichachsig angeordnete, sich senkrecht zur Achse 46 der Gewindespindel 17 erstreckende Lagerbolzen 47, wie besonders deutlich aus Fig. 2 zu ersehen ist. An den Lagerbolzen 47 sind die jeweils als Doppelhebel ausgebildeten Bremszangen-Bremshebel 4 gelagert, wie aus Fig. 1 ersichtlich ist. Die Doppelhebelausbildung der Bremszangen-Bremshebel und deren Lagerung an den Lagerbolzen 47 ist bei Bremszangen üblich und beispielsweise auch der bereits erwähnten DE-A-2 346 828 entnehmbar, so dass hierzu keine weiteren Erläuterungen nötig sind.

Der Wickelsinn der Schraubenfeder 24 ist derart, dass beim Bewegen des Drehhebels 12 durch Bremsluftbeaufschlagung des Druckluftzylinders 14 die durch Reibschluss auf der Zylinderfläche 19 mitgenommene Schraubenfeder 24 sich zusammenzuziehen versucht und hierbei ihre radiale Anpressung an die Zylinderflächen 19 und 22 verstärkt, wodurch der Drehhebel 12 in dieser Drehrichtung drehfest mit der Gewindespindel 17 gekuppelt wird und letztere mitnimmt; bei umgekehrter Drehrichtung des Drehhebels 12 dagegen wird die Schraubenfeder 24 in Aufdrehrichtung belastet, so dass sie ihren Reibschluss zu den Zylinderflächen 19 und 22 lockert und die Gewindespindel 17 mit nur geringer Reibungskraft, eine Reibkupplung bildend, mitzunehmen vermag. Die Schraubenfeder 24 bildet also zusammen mit den Zylinderflächen 19 und 22 eine von einer Reibungskupplung überbrückte Einwegkupplung; in den Fig. 4, 5 und 6 ist die Drehrichtung des Drehhebels 12 zum Sperren dieser Einwegkupplung mit der Pfeilrichtung A angegeben. Die Steigungen der Gewinde 31 und 32 sind derart gewählt, dass bei durch Bremsdruckbeaufschlagung des Druckluftzylinders 14 erfolgendem Drehen des Drehhebels 12 und der hierbei über die sperrende Einwegkupplung erfolgender Mitnahme der Gewindespindel 17 sich der gegenseitige Abstand der beiden Muttern 33 und 34 verkürzt.

Die Schraubenfeder 37 weist eine Wickelrichtung auf, welche beim Drehen der Gewindespindel 17 in Verkürzrichtung des Abstandes zwischen den beiden Muttern 33 und 34 durch den Reibschluss zur Zylinderfläche 36 ein Zusammenziehen der Schraubenfeder 37 ergibt, so dass sich ihr Reibschluss zur Zylinderfläche 36 zumindest wesentlich verringert. In umgekehrter Drehrichtung der Gewindespindel 17 wird dagegen die Schraubenfeder 37 in Aufdrehrichtung beansprucht, so dass sich ihre Anpressung an die Zylinderfläche 36 verstärkt; die Schraubenfeder 37 ist jedoch derart bemessen, dass bei entsprechend grossem, auf die Schraubspindel 17 einwirkenden Drehmoment die über die Abkröpfung 38 festgehaltene Schraubenfeder 37 gegen die Zylinderfläche 36 durchrutscht. Auch die Schraubenfeder 37 stellt somit eine Einwegkupplung zwischen der Gewindespindel 17 und dem Stift 39 dar, welche durch eine Reibungskupplung überbrückt ist.

Der mit Drehspiel in den Quernuten 42 geführte Querstift 41 stellt einen spielbehafteten Drehanschlag dar, dessen Drehspiel x einer Drehung der Gewindespindel 17 entspricht, welche einer dem Soll-Lüfthub der Bremsbacken 3 von der Bremsscheibe 1 im Bremsenlösezustand über die Bremszangen-Bremshebel 4 übersetzt entsprechenden Abstandsänderung zwischen den Muttern 33 und 34 entspricht.

Das insoweit beschriebene Bremsgestänge wirkt wie folgt:

Wird ausgehend vom Lösezustand der Reibungsbremsen nach Fig. 1 mit um den Soll-Lösehub von der Bremsscheibe 1 abgehobenen Bremsbacken 3 eine Bremsung eingeleitet, so setzt die in ihrem Druck ansteigende, dem Bremszylinder 6 und dem Druckluftzylinder 14 zugeführte Bremsdruckluft anfänglich den Kolben des Druckluftzylinders 14 in Bewegung, wobei dieser über den Hebel 13 den Drehhebel 12 in Sperrrichtung der Schraubenfeder 27 dreht, wodurch die Gewindespindel 17 vom Drehhebel 12 mitgenommen wird und den Abstand der beiden Muttern 33 und 34 verkürzt. Über die Reibung der Schraubenfeder 37 zur Zylinderfläche 36 wird dabei der Stift 39 mitgenommen, wobei der anfänglich die Endlage nach Fig. 6 in den Quernuten 42 einnehmende Querstift 41 in Pfeilrichtung A verdreht wird. Die beiden Bremszangen-Bremshebel 4 werden dabei einander angenähert, bis die Bremsbacken 3 an der Bremsscheibe 1 zur Anlage gelangen; gerade in diesem Augenblick hat sich der Querstift 41 in den Quernuten 42 um das Drehspiel x verdreht, so dass er seine anderseitige Endlage einnimmt. Nunmehr bleibt der Kolben des Druckluftzylinders 14 stehen, da er die Bremsbacken 3 über das Schraubgetriebe nicht mit grösserer Kraft an die Bremsscheibe 1 anzupressen vermag. Bei der nachfolgenden Bremsdrucksteigerung wird auch der Kolben des Bremszylinders 6 bewegt, wodurch die bremsbackenabseitigen Enden der Bremshebel 4 auseinandergepresst werden, die beiden Bremshebel 4 sich um ihre Anlenkungen an den Muttern 33 und 34 drehen, die Zugstange 11 mit dem Lüftspielnachsteller 10 auf Zug beanspruchen und die Bremsbacken 3 mit entsprechend grosser Kraft an die Bremsscheibe 1 zum Bewirken einer Abbremsung anpressen. Die Teile des Lüftspielnachstellers 10 erfahren hierbei keine Relativbewegungen zueinander mehr. Durch entsprechende Steigungswahl der Gewinde 31 und 32 wird dabei die auf die Gewindespindel 17 durch die Zugbelastung der Zugstange einwirkende Drehmomentbelastung so gering gehalten, dass der Druckluftzylinder 14 den Drehhebel 12 in seiner Lage zu halten vermag.

Beim nachfolgenden Bremsenlösen spielen sich entsprechend umgekehrte Vorgänge ab, lediglich das Zurückbewegen der Kolben des Bremszylinders 6 und des Druckluftzylinders 14 muss nicht zeitlich versetzt zueinander, sondern kann auch gleichzeitig erfolgen. Zu Ende des Bremsenlösevorganges befinden sich die beiden Bremsbacken 3 wieder in um den Soll-Lüfthub abgehobener Lage vor der Bremsscheibe 1.

Falls der Abstand der Bremsbacken 3 zur Bremsscheibe 1 zu Bremsbeginn das Soll-Lüftspiel überschreitet, erfolgt das Bremseneinleiten wie vorstehend beschrieben, wobei jedoch nach Verdrehen des Querstiftes 41 um das Drehspiel x die Bremsbacken 3 der Bremsscheibe 1 noch nicht anlegen. Der Druckluftzylinder vermag daher über den Drehhebel 12 und die sperrende Schraubenfeder 24 die Gewindespindel 17 weiter zu verdrehen, wobei jedoch nunmehr der Stift 39 durch den an den Enden der Quernuten 42 anliegenden Querstift 41 an einer weiteren Drehung gehindert und somit festgehalten wird; die durch die Abkröpfung 38 mit festgehaltene Schraubenfeder 37 verringert daher ihren Reibschluss zur Zylinderfläche 36 und rutscht gegenüber dieser durch. Dieser Vorgang hält an, bis durch weitere Annäherung der beiden Muttern 33 und 34 über die Bremszangen-Bremshebel 4 die Bremsbacken 3 an die Bremsscheibe 1 angelegt ist. Der weitere Einbremsvorgang erfolgt wie vorstehend bereits beschrieben.

Beim nachfolgenden Bremsenlösen verringert anfänglich der Bremszylinder 6 die Anpressung der Bremsbacken 3 an die Bremsscheibe 1 bis zu deren blossen Anlegen. Nachfolgend wird der Kolben des Druckluftzylinders 14 durch eine in ihm vorgesehene Rückdruckfeder zurückbewegt, wobei der Drehhebel 12 entsprechend zurückverschwenkt wird. Dabei nimmt anfänglich die Schraubenfeder 24 durch ihren Reibschluss zu den Zylinderflächen 19 und 22 die Gewindespindel 17 mit, welche ihrerseits über die Schraubenfeder 37 den Stift 39 bis zum Verschwenken um das Drehspiel x mitnimmt. Nach Zurücklegen des Drehspiels x schlägt der Querstift 41 an den Enden der Quernuten 42 an und hindert dadurch den Stift 39 an einer weiteren Drehung. Bei weiterer Drehbelastung der Gewindespindel 17 verstärkt die ebenfalls undrehbar gehaltene Schraubenfeder 37 ihre Anpressung an die Zylinderfläche 36 und hält damit auch die Gewindespindel 17 in ihrer erreichten Drehlage fest. Beim weiteren Rückdrehen des Drehhebels 12 löst die Schraubenfeder 24 ihre Reibkupplung zu den Zylinderflächen 19 und 22, so dass bei stehenbleibender Gewindespindel 17 sich der Drehhebel 12 in seine Ausgangslage zurückdrehen kann. Während des Drehens der Drehspindel 17 um das Drehspiel x wurden die Bremsbacken 3 um das Soll-Lüftspiel von der Bremsscheibe 1 abgehoben, und während des nachfolgenden Zurückdrehens des Drehhebels 12 in dessen Ausgangslage bei stehenbleibender Gewindespindel 17 wird der zu Bremsbeginn bestehende Überwert des Bremsbacken-Lüftspiels über das Soll-Lüftspiel nachgestellt und beseitigt. Zum Löseende befindet sich das Bremsgestänge in seiner in Fig. 1 dargestellten Lage mit um das Soll-Lösespiel von der Bremsscheibe 1 abgehobenen Bremsbacken 3.

Soll zum Austausch verschlissener gegen neue Bremsbacken 3 die Zugstange 11 und damit der Lüftspielnachsteller 10 zurückgestellt, d.h. verlängert werden, so ist die Hülse 28 willkürlich bzw. von Hand, gegebenenfalls unter Zuhilfenahme eines geeigneten Werkzeuges, entgegen der Pfeilrichtung A zu drehen. Bei dieser Drehung wird über den Stift 27 die Schraubenfeder 24 in Aufdrehrichtung drehbelastet, so dass sie ihren Reibeingriff zur Zylinderfläche 19 verringert bzw. löst und mitgedreht wird. Diese Drehung wird über den Stift 25 und den Ringflansch 23 auf die Gewindespindel 17 übertragen, welche sich unter dem bereits erwähnten Durchrutschen der in Sperrichtung belasteten, drehfest gehaltenen Schraubenfeder 37 relativ zur Zylinderfläche 36 mitdreht und dabei über die Gewindeabschnitte 29 und 30 den Abstand der beiden Muttern 33 und 34 vergrössert. Hierdurch wird Raum für den Bremsbackenwechsel geschaffen. Beim Bremsen nach dem Bremsbackenwechsel stellt sich das Lüftspiel selbsttätig in vorstehend beschriebener Weise wieder auf seinen Sollwert ein.

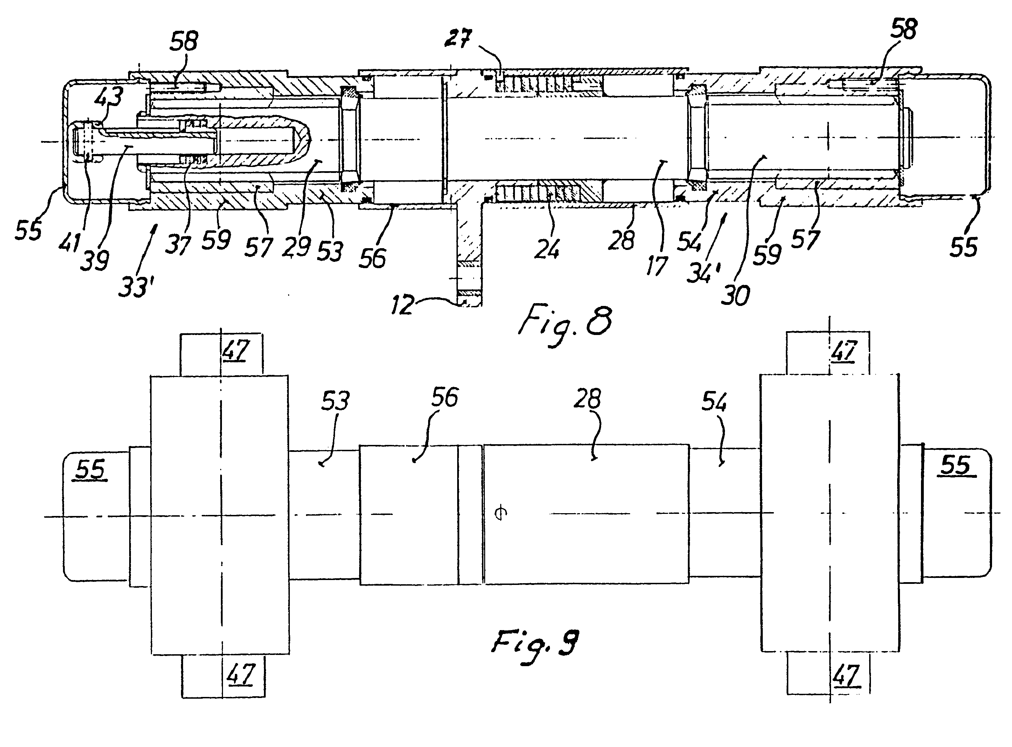

Die Anlenkung des Druckluftzylinders 14 oder eines andersartigen, beliebig ausgestalteten Hilfskraftmotors ohne integrierte Rückdruckfeder kann in der eine Stirnansicht des Lüftspielnachstellers zeigenden Fig. 7 ersichtlichen Weise erfolgen. Der Hebel 13 ist mittels eines Lagerauges 48 zugleich mit einem Ende einer Zugfeder 49 mittels einer Lagerschraube 50 am Drehhebel 12 angelenkt. Der Hebel 13 endet mit einer Verschraubung 51, mittels welcher das Kraftabgabeglied des nicht dargestellten Hilfskraftmotors justierbar anzubinden ist. Die sich andererseits vom Drehhebel 12 weg erstreckende, spielfrei gewickelte Zugfeder 49 ist an einer ortsfest gehaltenen Lageröse 52 eingehängt. Bei unbetätigtem Hilfskraftmotor zieht die Zugfeder 49 den Hebel 12 in die durch ihre Blocklage bestimmte Endstellung.

Der Aufbau, die Funktionsweise und die Einordnung in das Bremsgestänge des Lüftspielnachstellers nach Fig. 8 und 9 ist prinzipiell gleichartig zum vorbeschriebenen Lüftspielnachsteller, sie brauchen daher hier nicht weiter beschrieben zu werden. Lediglich die Muttern 33' und 34' weisen an ihren die Gewindespindel 17 übergreifenden Enden aussenzylindrische Abschnitte 53 bzw. 54 auf und sind anderseitig durch topfartige Endkappen 55 verschlossen. Die Hülse 28 ist abgedichtet drehbar auf einem kurzen Zylinderabschnitt des Drehhebels 12 und andererseits abgedichtet drehbar und axialverschieblich auf dem Abschnitt 54 der Mutter 34' gelagert. Andererseits trägt der Drehhebel 12 eine weitere Hülse 56, die abgedichtet drehbar und axialverschieblich auf dem Abschnitt 53 der Mutter 33' gelagert ist. Auf diese Weise wird der gesamte Innenraum des Lüftspielnachstellers nach Fig. 8 und 9 wirksam gegen das Eindringen von Schmutz und Fremdkörpern geschützt, wodurch ein besonders verschleissarmer und störungsfreier Betrieb über lange Wartungsintervalle gewährleistet wird. Zum Vereinfachen der Herstellung können die Muttern 33' und 34' jeweils aus einem die Verschraubung zur Gewindespindel 17 aufweisenden Mutterteil 57 und einem mit diesem über Stifte 58 fest verbundenen Hülsenteil 59 zusammengesetzt sein. Die weiteren, in Fig. 8 und 9 eingetragenen Bezugszeichen sollen lediglich den Vergleich zu Fig. 3 und 2 erleichtern.

Falls das Bremsgestänge mit einer Parkbremse versehen werden soll, so kann am Drehhebel 12 parallel zum Druckluftzylinder 14 bzw. andersartig ausgebildeten Hilfskraftmotor über eine spielbehaftete Kupplungseinrichtung, beispielsweise eine Langlochanlenkung, ein Parkbremskraftmotor beliebiger Bauart, beispielsweise eine mechanische Zuspannung oder ein Federspeicherbremszylinder, angelenkt werden. Der vorstehend beschriebene Betriebsbremsbetrieb wird hierdurch nicht beeinflusst, bei Betätigung des Parkbremsmotors dagegen legt dieser, wie beim vorstehend beschriebenen Ausführungsbeispiel für den Druckluftzylinder 14 beschrieben, durch Drehen des Drehhebels 12 anfänglich die Bremsbacken 3 an die Bremsscheibe 1 an, dreht jedoch sodann den Drehhebel 12 mit grosser Kraft weiter, wobei über das Schraubgetriebe die beiden Muttern 33 und 34 mit grosser Kraft zusammengezogen werden und die Scheibenbremse kräftig zuspannen. Beim nachfolgenden Bremsenlösen stellt beim Zurückdrehen des Drehhebels 12 in seine Ausgangslage der Lüftspielnachsteller 10 den Festspannhub wie einen Überhub nach, da jedoch der Festspannhub für die Reibungsbremse wesentlich kleiner als der Anlegehub ist, ist diese Nachstellung unbedeutend und führt lediglich zu einem geringfügig unterhalb des Soll-Lüftspiels bleibenden Abheben der Bremsbacken 3 von der Bremsscheibe 1. Bei mehrmalig unmittelbar wiederholter Parkbremsung ergibt sich kein weiterer Nachstellvorgang, die Scheibenbremse bleibt also stets lösbar.

Abweichend zur vorbeschriebenen Ausführungsform kann das Bremsgestänge auch dadurch mit einer Parkbremsmöglichkeit versehen werden, dass dem Bremszylinder 6 ein Parkbremskraftmotor parallel- oder nachgeordnet wird, im letzteren Falle am besten in Kombination mit dem Bremszylinder als einheitlicher, üblicher Kombizylinder. Beim Parkbremsen kann hierbei das Bremsenanlegen vermittels des Druckluftzylinders 14 erfolgen, es ist jedoch auch möglich, dass der Parkbremskraftmotor den Anlegehub für die Scheibenbremse mit übernimmt.

Bei den vorstehend beschriebenen Parkbremsungen ist ein mechanisches Notlösen, wie es beispielsweise bei Ausfall des Parkbremskraftmotors erforderlich ist, dadurch möglich, dass die Hülse 28 manuell derart gedreht wird, dass über den Stift 27 die Schraubenfeder 24 in Aufdrehrichtung belastet wird und hierdurch ihren Reibschluss zur Zylinderfläche 19 verliert. Beim am Drehhebel 12 angelenkten Parkbremskraftmotor kann sich dieser unter weiterer Drehung des Drehhebels 12 entspannen, bis er in eine durch einen Anschlag abgefangene Endlage gelangt und keine Kraft mehr auf den Drehhebel 12 auszuüben vermag, die Gewindespindel 17 wird also auch nach nachfolgender Freigabe der Hülse 28 von seiten des Parkbremskraftmotors von keinem Drehmoment mehr belastet, wodurch bei entsprechender Wahl der Steigung der Gewinde 31 und 32 die Zugverspannung der beiden Muttern 33 und 34 entfällt und die Bremsbacken 3 nur mehr kraftlos an der Bremsscheibe 1 anliegen. Es kann zweckmässig sein, die Gewinde 31 und 32 hierbei nichtselbsthemmend auszubilden.

Falls der Parkbremskraftmotor in Serie oder parallel zum Bremszylinder 6 wirkend angeordnet ist, ist es zum mechanischen Notlösen besonders zweckmässig, die Gewinde 31 und 32 nichtselbsthemmend auszubilden. Wird während Parkbremsungen die Hülse 28, wie vorstehend erwähnt, manuell verdreht, so kann sich der Parkbremskraftmotor bis zu seinem Endanschlag entspannen, wobei er die beiden Muttern 33 und 34 unter über die nichtselbsthemmenden Gewinde 31 und 32 erfolgendem Verdrehen der Gewindespindel 17 auseinanderzieht, die Bremszange 5 wird kraftlos und die Bremsbacken 3 liegen nur mehr lose an der Bremsscheibe 1 an.

Bei beiden Parkbremsausführungen ist also ein mechanisches Schnellösen ohne baulichen Mehraufwand möglich.

Insbesondere bei Fahrzeugen, bei welchen die Parkbremse oft zu betätigen ist, wie beispielsweise bei U-, Stadt- oder Strassenbahnen, kann das Bremsgestänge dadurch vereinfacht werden, dass bei der Anordnung nach Fig. 1 der Druckluftzylinder 14 durch einen Parkbremskraftmotor, insbesondere einen Federspeicherbremszylinder ersetzt wird; der Hilfskraftmotor entfällt bei dieser Anordnung. Während normalen Betriebsbremsungen muss dann zwar der Bremszylinder 6 zusätzlich zum Festbremshub auch den Anlegehub für die Scheibenbremse aufbringen, wie es der Funktionsweise üblicher Bremsgestänge entspricht, wobei keine Lüftspielnachstellung erfolgt. Die Spielnachstellung erfolgt beim Betätigen der Parkbremse in Art einer Hubnachstellung für den Gesamthub; da diese Parkbremsbetätigungen häufig erfolgen, genügt diese Nachstellung auch für die Betriebsbremsungen. Dieses Bremsgestänge erfordert trotz Parkbremsmöglichkeit nur einen besonders geringen Bauaufwand.

Das Bremsgestänge muss nicht als Bremszange entsprechend den vorstehend beschriebenen Ausführungsbeispielen ausgebildet sein, es kann vielmehr in beliebiger andersartiger Weise ausgebildet sein, beispielsweise als ein übliches H-Bremsgestänge. Der Lüftspielnachsteller ist hierbei in einen von der Bremskraft auf Zug beanspruchten Gestängeteil einzuordnen, wobei die an ihn angrenzenden Gestängeteile an die Muttern 33 und 34 anzulenken sind.

Die Funktionsweise für Anlegehub, Festbremshub und Parkbremsmöglichkeiten entsprechen dabei im Prinzip den vorstehend erläuterten Ausführungsbeispielen, so dass sich weitere Beschreibungen hierzu erübrigen.

Ohne die Funktionsweise des Bremsgestänges zu ändern, kann der Lüftspielnachsteller mannigfaltige Abwandlungen erfahren. So ist es beispielsweise insbesondere bei keine Bremszangen darstellenden Bremsgestängen möglich, unter Entfall der Mutter 34 und des Gewindeabschnittes 30 die Gewindespindel 17 mittels eines üblichen Lagerauges und einer Drehlagerung an einem Bremsgestängeteil anzulenken, die Längenveränderung des Lüftspielnachstellers erfolgt dann allein über die Verschraubung des Gewindeabschnittes 29 mit der Mutter 33. Weiterhin ist es möglich, anstelle der äusseren Zylinderflächen 19 und 22 Innenzylinderflächen zum Zusammenwirken mit der Schraubenfeder 24 vorzusehen; entsprechende Umkehrungen sind an der Schraubenfeder 37 möglich, so dass diese beispielsweise drehfest mit der Gewindespindel 17 gekoppelt wird. Weiterhin können die durch die Schraubenfedern 27 und/oder 37 gebildeten Einweg- und Reibungskupplungen durch andersartige, übliche und gegebenenfalls getrennte Bauteile entsprechend dem bereits erwähnten DE-U-7 006 455 gebildete Einweg- und/ oder Reibungskupplungen ersetzt werden. Auch ist eine Vertauschung von Gewindespindel und Muttern möglich, derart, dass anstelle der Gewindespindel 17 eine hülsenartige, vom Drehhebel 12 antreibbare Mutter vorgesehen wird, in welche von beiden Enden her mit den Gestängeteilen zu koppelnde Gewindespindeln eingeschraubt sind. Weiterhin kann der Lüftspielnachsteller auch von den vorbeschriebenen Ausführungsbeispielen völlig abweichend in Anlehnung an die bekannten Bremsgestängenachsteller ausgebildet werden, sofern es nur möglich ist, deren Nachstellorgan mit dem Hilfskraft- bzw. Parkbremskraftmotor derart zu koppeln, dass vermittels dieses Motors zu Bremsbeginn ein Bremsenanlegen durch Längenveränderung des Gestängestellers möglich ist.

Abweichend zum eingangs beschriebenen Ausführungsbeispiel kann zum Steuern der Bewegungsfolge von Hilfskraft- und Bremskraftmotor bei deren Anschluss an die gleiche Energiequelle eine übliche Verzögerungseinrichtung vorgesehen werden, bei Ausbildung der Motoren als Druckluftzylinder kann die Verzögerungseinrichtung beispielsweise als die Beaufschlagung des Bremszylinders verzögerndes Schaltventil entsprechend der bereits erwähnten DE-C-1 240 116 oder 811 242 ausgebildet werden.

Der Bremskraft- und der Hilfskraftmotor müssen nicht an die gleiche Energiequelle angeschlossen sein. Beispielsweise ist es möglich, als Bremskraftmotor einen Bremszylinder 6 vorzusehen, während das Lagerauge 15 nicht von einem Drehhebel 12, sondern beispielsweise vermittels eines Elektromotors antreibbar ist. Bei bestimmten Fahrzeugen können sich hierdurch Steuerungs- und Einbauvorteile ergeben.

Durch entsprechende Umkehrungen der Gewinde 31 und 32 bzw. der durch die Schraubenfedern 24 und 37 gebildeten Einwegkupplungen lassen sich die vorstehend beschriebenen Lüftspielnachsteller derart umgestalten, dass sie durch die Bremskraft nicht auf Zug, sondern auf Druck zu beanspruchen sind; derartig umgestaltete Lüftspielnachsteller sind in das Bremsgestänge zwischen zwei durch die Bremskraft auf Druck beanspruchte Bremsgestängeteile einzuordnen. Beispielsweise könnte ein derartiger, im übrigen jedoch entsprechend den vorstehend beschriebenen Abänderungsmöglichkeiten beliebig ausgestaltbarer Lüftspielnachsteller in die Kolbenstange eines Bremszylinders integriert werden.

In weiterer Abwandlung des Bremsgestänges ist es möglich, den Bremskraft- und den Hilfskraftmotor zu einem gemeinsamen Kraftmotor bzw. einer gemeinsamen, regelbar betätigbaren Kraftquelle zusammenzufassen. Bei Bremsbeginn wird von dieser Kraftquelle die Betätigungskraft und der Betätigungshub zum Antrieb des Nachstellorgans abgeleitet, was über ein den Hubweg bzw. die Betätigungskraft begrenzendes Zwischenglied erfolgt. Das Zwischenglied kann ähnlich einer für Bremsgestängesteller üblichen Kulissenführung oder als Federglied oder dergleichen ausgebildet sein. Nachfolgend hierzu wird von der Kraftquelle die Zuspannkraft und der Zuspannhub für die Fahrzeug-Reibungsbremse abgenommen. Dieses Bremsgestänge weist lediglich hinsichtlich der gemeinsamen Kraftquelle für die Hilfskraft und die Bremskraft eine gewisse Ähnlichkeit zur Anordnung nach der bereits erwähnten DE-A-2 346 828 auf.

*Kurzbeschreibung*

Das Bremsgestänge für Fahrzeug-Reibungsbremsen ist durch einen Bremskraftmotor 6 betätigbar und umfasst einen Lüftspielnachsteller 10, der ein durch einen Hilfskraftmotor 14 antreibbares Nachstellorgan aufweist. Zu Bremsbeginn wird der Hilfskraftmotor 14 voreilend zum Bremskraftmotor 6 betätigt, wodurch über das Nachstellorgan ein Anlegen der Fahrzeugreibungsbremse bewirkt wird. Nachfolgend wird der Bremskraftmotor 6 betätigt und spannt die Fahrzeug-Reibungsbremse fest zu. Das Bremsgestänge ist besonders zweckmässig als Bremszange 5 für Scheibenbremsen ausbildbar, wobei der Lüftspielnachsteller 10 in die Zugstange 11 integriert ist.

*Bezugszeichenliste*

| | |
|---|---|
| 1 | Bremsscheibe |
| 2 | Schienenfahrzeugradsatz |
| 3 | Bremsbacke |
| 4 | Bremszangen-Bremshebel |
| 5 | Bremszange |
| 6 | Bremszylinder |
| 7 | Lagerauge |
| 8 | Kolbenstange |
| 9 | Rohranschluss |
| 10 | Lüftspielnachsteller |
| 11 | Zugstange |
| 12 | Drehhebel |
| 13 | Hebel |
| 14 | Druckluftzylinder |
| 15 | Lagerauge |
| 16 | Abschnitt |
| 17 | Gewindespindel |
| 18 | Sicherungsring |
| 19 | Zylinderfläche |
| 20 | Ansatz |
| 21 | Hülsenteil |
| 22 | Zylinderfläche |
| 23 | Ringflansch |
| 24 | Schraubenfeder |
| 25 | Stift |
| 26 | Quernut |
| 27 | Stift |
| 28 | Hülse |
| x | Drehspiel |
| A | Pfeilrichtung |
| 29 | Gewindeabschnitt |
| 30 | Gewindeabschnitt |
| 31 | Gewinde |
| 32 | Gewinde |
| 33, 33' | Mutter |
| 34, 34' | Mutter |
| 35 | Ausnehmung |
| 36 | Zylinderfläche |
| 37 | Schraubenfeder |
| 38 | Abkröpfung |
| 39 | Stift |
| 40 | Längsnut |
| 41 | Querstift |

42   Quernut
43   Hülsenansatz
44   Endkappe
45   Verschraubungen
46   Achse
47   Lagerbolzen
48   Lagerauge
49   Zugfeder
50   Lagerschraube
51   Verschraubung
52   Lageröse
53   Abschnitt
54   Abschnitt
55   Endkappe
56   Hülse
57   Mutterteil
58   Stift
59   Hülsenteil

**Patentansprüche**

1. Bremsgestänge für Fahrzeugreibungsbremsen mit einem zwischen zwei Bremsgestängeteilen (Bremszangenbremshebel 4) eingeordneten, von der durch einen Bremskraftmotor (6) ausübbaren Bremszuspannkraft auf Zug oder Druck belastbaren, längenveränderlichen Lüftspielnachsteller (10), insbesondere Bremszange (5) für Schienenfahrzeug-Scheibenbremsen (Bremsscheibe 1, Bremsbacken 3) mit als Lüftspielnachsteller (10) ausgebildeter Zugstange (11),
- wobei der Lüftspielnachsteller (10) ein bei Überschreiten eines Soll-Lüftspiels durch einen zu Bremsbeginn voreilend zum Bremskraftmotor (6) betätigbaren Hilfskraftmotor (14) antreibbares Nachstellorgan (Gewindespindel 17, Mutter 33, 34) zum Reduzieren des Lüftspiels auf das Soll-Lüftspiel aufweist, welche die Länge des Lüftspielnachstellers (10) im Verkleinerungssinn des Lüftspiels bis zum Anlegen der Fahrzeug-Reibungsbremse verstellt und welches ein Schraubgetriebe mit einer Gewindespindel (17) und einer auf dieser verschraubbaren Mutter (33, 34) umfasst,
- wobei eines der beiden Schraubgetriebeteile (Gewindespindel 17) vom Hilfskraftmotor (14) drehbar und das andere Verschraubungsteil (Mutter 33, 34) undrehbar geführt ist,
- wobei der Hilfskraftmotor (14) an einem drehbar auf einem Teil gelagerten Drehhebel (12) angreift, welches Teil unverdrehbar mit dem drehbaren Verschraubungsteil (Gewindespindel 17) gekoppelt ist, und der Drehhebel (12) über eine erste Reibungskupplung (Schraubenfeder 24) mit dem drehbaren Verschraubungsteil (Gewindespindel 17) gekoppelt ist,
- wobei das drehbare Verschraubungsteil (Gewindespindel 17) über eine in dessen Drehrichtung zum Bremsenlüften sperrende Einwegkupplung (Schraubenfeder 37) und in Serie hierzu über einen Drehanschlag mit einem drehfest gehaltenen Teil gekoppelt ist, wobei die Reibungskupplung stärker als der Leerlaufwiderstand in Entsperrichtung der Einwegkupplung ausgelegt ist,
- wobei das undrehbare Verschraubungsteil (Mutter 33) undrehbar und axialkraftübertragend an einem Bremsgestängeteil (Bremszangenbremshebel 4) angelenkt ist,
- wobei nachfolgend zur Betätigung des Hilfskraftmotors (14) der Bremskraftmotor (6) die Fahrzeugreibungsbremse fest zuspannt, und wobei zu Bremsende gleichzeitig oder nachfolgend zum Abklingen der Betätigung des Bremskraftmotors (6) der Hilfskraftmotor (14) beim Abklingen seiner Betätigung vermittels des Nachstellorgans (Gewindespindel 17, Mutter 33, 34) die Länge des Lüftspielnachstellers (10) im Lüftsinn der Fahrzeug-Reibungsbremse bis zum Erreichen des Soll-Lüftspiels zurückverstellt,

gekennzeichnet durch die Kombination der Merkmale,
-- dass der Drehhebel (12) drehbar auf dem drehbaren Verschraubungsteil (Gewindespindel 17) gelagert und über eine in Drehrichtung zum Bremsanlegen sperrende, die erste Reibkupplung (Schraubenfeder 24) überbrückende, erste Einwegkupplung (Schraubenfeder 24) mit diesem Verschraubungsteil (Gewindespindel 17) gekoppelt ist,
-- dass die das drehbare Verschraubungsteil (Gewindespindel 17) in dessen Drehrichtung zum Bremsenlüften sperrende, zweite Einwegkupplung (Schraubenfeder 37) von einer zweiten Reibungskupplung (Schraubenfeder 37) überbrückt und der in Serie hierzu vorgesehene, gegebenenfalls zum zweiten Verschraubungsteil (Mutter 33) führende Drehanschlag (Querstift 41, Quernut 42) spielbehaftet ist, wobei jede Reibungskupplung stärker als der Leerlaufwiderstand in Entsperrichtung der jeweils durch sie nicht überbrückten Einwegkupplung ausgelegt ist und wobei das Drehspiel (x) des Drehanschlages (Querstift 41, Quernut 42) einem dem Soll-Lüftspiel entsprechenden Schraubhub des Schraubgetriebes (Gewindespindel 17, Mutter 33, 34) entspricht, und
-- dass das drehbare Verschraubungsteil (Gewindespindel 17) drehbar und axialkraftübertragend an dem anderen Bremsgestängeteil (Bremszangenhebel 4) angelenkt ist.

2. Bremsgestänge nach Anspruch 1, dadurch gekennzeichnet, dass die erste Einwegkupplung und die erste Reibungskupplung eine gemeinsame, wenigstens annähernd spielfrei gewickelte, erste Schraubenfeder (24) aufweisen, die mit radialer Vorspannung an sie jeweils wenigstens annähernd zur Hälfte ihrer Längserstreckung durchragenden bzw. übergreifenden Zylinderflächen (19, 22) des Drehhebels (12) und des drehbaren Verschraubungsteiles (Gewindespindel 17) anliegt und deren Wickelrichtung einer Verstärkung ihrer radialen Anpressung an die Zylinderflächen (19, 22) bei Drehen des Drehhebels (12) im Bremsanlegesinn bewirkend gewählt ist.

3. Bremsgestänge nach Anspruch 1 oder 2, dadurch gekennzeichnet, dass die zweite Einwegkupplung und die zweite Reibungskupplung eine gemeinsame, wenigstens annähernd spielfrei gewickelte, zweite Schraubenfeder (37) aufweisen, die mit radialer Vorspannung an einer sie übergreifenden oder durchgreifenden Zylinderfläche (36) des drehbaren Verschraubungsteiles (Mutter 33) oder eines zu diesem konzentrischen Zwischenteiles anliegt und de-

ren eines Ende axial verschieblich und undrehbar am jeweils anderen Teil — dem Zwischenteil (Stift 39) oder dem drehbaren Verschraubungsteil — geführt ist, wobei die Wickelrichtung einer Schwächung ihrer radialen Anpressung an die Zylinderfläche (36) bei Drehen des drehbaren Verschraubungsteiles (Gewindespindel 17) im Bremsanlegesinn bewirkend gewählt ist, und dass das Zwischenteil (Stift 39) drehbar gelagert und über den Drehanschlag (Querstift 41, Quernut 42) mit dem drehfest gehaltenen Teil (Mutter 33) gekoppelt ist.

4. Bremsgestänge nach Anspruch 2 oder 3, dadurch gekennzeichnet, dass die beiden Schraubenfedern (24, 37) wie an sich bekannt aus im Querschnitt quadrat- oder rechteckförmigem Stahldraht gewickelt sind und dass die zweite Schraubenfeder (37) kleiner und schwächer als die erste Schraubenfeder (24) ausgebildet ist.

5. Bremsgestänge nach Anspruch 4, dadurch gekennzeichnet, dass die zweite Schraubenfeder (37) endseitig ihrer axial verschieblichen und undrehbaren Führung eine radiale Abkröpfung (38) aufweist, die in einer Längsnut (40) am diesem Schraubenfederende zugeordneten Zwischenteil (Stift 39) bzw. drehbaren Verschraubungsteil verschieblich eingreift.

6. Bremsgestänge nach einem oder mehreren der Ansprüche 1 bis 5, dadurch gekennzeichnet, dass die zweite Einwegkupplung (Schraubenfeder 37) ein begrenztes, durch willkürliches Drehen des drehbaren Verschraubungsteiles überwindbares Sperrdrehmoment aufweist.

7. Bremsgestänge nach einem oder mehreren der Ansprüche 1 bis 6, dadurch gekennzeichnet, dass die erste Schraubenfeder (24) seitens des Drehhebels (12) mit einer willkürlich drehbaren Dreheinrichtung (Hülse 28) und anderseitig drehfest mit dem drehbaren Verschraubungsteil (Gewindespindel 17) gekoppelt ist.

8. Bremsgestänge nach Anspruch 7, dadurch gekennzeichnet, dass die Zylinderflächen (19, 22) die erste Schraubenfeder (24) durchgreifen und dass die Dreheinrichtung ein die erste Schraubenfeder (24) übergreifendes, willkürlich drehbares Rohrteil (Hülse 28) ist.

9. Bremsgestänge nach einem oder mehreren der Ansprüche 1 bis 8, dadurch gekennzeichnet, dass das drehbare Verschraubungsteil die Gewindespindel (17) ist, die nahe ihrer beiden Enden gegenläufige Gewindeabschnitte (29, 30) aufweist, deren jeder mit einer Mutter (33, 34) verschraubt ist, deren eine (33) undrehbar an dem einen Bremsgestängeteil (Bremszangenbremshebel 4) und deren andere (34) undrehbar an dem anderen Bremsgestängeteil (Bremszangenbremshebel 4) angelenkt ist, wobei bei Ausbildung des Bremsgestänges als Bremszange (5) die Anlenkstellen sich im mittleren Bereich der beiden Bremszangenbremshebel (4) befinden.

10. Bremsgestänge nach den Ansprüchen 8 und 9, dadurch gekennzeichnet, dass sich vom etwa mittig auf der Gewindespindel (17) gelagerten Drehhebel (12) je ein Rohrteil (Hülse 28, 56) zu den beiden jeweils eine geschlossene Endkappe (55) aufweisenden Muttern (33', 34') erstreckt, auf welchen die Rohrteile (Hülse 28, 56) abgedichtet drehbar und axial verschieblich gelagert sind, und dass das eine, zugleich die Dreheinrichtung bildende Rohrteil (Hülse 28) andererseits abgedichtet drehbar am Drehhebel (12) gelagert ist (Fig. 8).

11. Bremsgestänge nach einem oder mehreren der Ansprüche 7 bis 10, dadurch gekennzeichnet, dass parallel zum Hilfskraftmotor (14) ein Parkbremskraftmotor mit dem Nachstellorgan gekoppelt ist.

12. Bremsgestänge nach Anspruch 11, dadurch gekennzeichnet, dass der Parkbremskraftmotor über eine Anschlagkupplung mit einem zumindest dem Hubweg des Hilfskraftmotors (14) zum Überwinden des Soll-Lüftspiels entsprechenden Spiel mit dem Drehhebel (12) gekoppelt ist.

13. Bremsgestänge nach einem der Ansprüche 7 bis 10, wobei ein parallel oder in Serie zum Bremskraftmotor (6) mit wenigstens einem der Bremsgestängeteile gekoppelter Parkbremskraftmotor vorgesehen ist, dadurch gekennzeichnet, dass das bzw. die Gewinde (31, 32) des Schraubgetriebes (Gewindespindel 17, Mutter 33, 34) nichtselbsthemmend ausgebildet ist bzw. sind.

14. Bremsgestänge nach einem oder mehreren der Ansprüche 1 bis 13, dadurch gekennzeichnet, dass der Bremskraftmotor (6) und der Hilfskraftmotor (14) an die gleiche, regelbare Energiequelle angeschlossen sind, wobei der Hilfskraftmotor (14) bei geringerer Energiezufuhr ansprechend ausgebildet ist als der Bremskraftmotor (6).

15. Bremsgestänge nach einem oder mehreren der Ansprüche 1 bis 14, dadurch gekennzeichnet, dass der Bremskraftmotor (6) und der Hilfskraftmotor (14) als Druckluftzylinder und gegebenenfalls der Parkbremskraftmotor als Federspeicherbremszylinder ausgebildet sind.

16. Bremsgestänge nach einem oder mehreren der Ansprüche 1 bis 13, dadurch gekennzeichnet, dass für den Bremskraft- und den Hilfskraftmotor eine gemeinsame Kraftquelle vorgesehen ist, von welcher zu Bremsbeginn die Betätigungskraft und der Betätigungshub zum Antrieb des Nachstellorgans über ein den Hubweg bzw. die Betätigungskraft begrenzendes Zwischenglied, das als Kulissenführung, Federglied oder dergleichen ausgebildet sein kann, abgeleitet wird und welche hierzu nachfolgend die Zuspannkraft und den Zuspannhub für die Fahrzeugreibungsbremse abgibt.

17. Bremsgestänge für Fahrzeugreibungsbremsen mit einem zwischen zwei Bremsgestängeteilen eingeordneten, von der durch einen Bremskraftmotor ausübbaren Bremszuspannkraft auf Zug oder Druck belastbaren, längenveränndnerlichen Lüftspielnachsteller, insbesondere Bremszange für Schienenfahrzeug-Scheibenbremsen mit als Lüftspielnachsteller ausgebildeter Zugstange, wobei der Lüftspielnachsteller ein bei Überschreiten eines Soll-Lüftspiels durch einen Hilfskraftmotor antreibbares Nachstellorgan zum Reduzieren des Lüftspiels auf das Soll-Lüftspiel aufweist, nach den kennzeichnenden Merkmalen eines oder mehrerer der Ansprüche 1 bis 10, dadurch gekennzeichnet, dass der Hilfskraftmotor als Parkbremskraftmotor, gegebenenfalls als Federspeicherbremszylinder ausgebildet ist.

## Claims

1. Brake gear for vehicle friction brakes having a longitudinally variable air play adjuster (10), which is arranged between two brake gear parts (brake caliper brake lever 4) and which may apply the brake clamping force, which may be exerted by a brake force motor (6), under tension or pressure, more particularly brake caliper (5) for rail vehicle disk brakes (brake disk 1, brake shoes 3) with drawbar (11) developed as an air play adjuster (10), in which case the air play adjuster (10) has an adjusting element (threaded spindle 17, nut 33, 34) which, when desired air play is exceeded, may be driven by means of an auxiliary force motor (14), which may be actuated at the start of braking in advance of the brake force motor (6), for reducing the air play to the desired air play, adjusting the length of the air play adjuster (10) in the sense of making the air play smaller until the vehicle friction is applied and embracing a helical gear with a threaded spindle (17) and a nut (33, 34) which may be screwed onto the latter; in which case one of the two helical gear parts (threaded spindle 17) is guided by the auxiliary force motor (14) so that it is capable of being turned and the other screwing part (nut 33, 34) is guided so that it is not capable of being turned; in which case the auxiliary force motor (14) acts upon a turning lever (12) pivoted on one part, which is coupled, such that it may not be twisted, with the turnable screwing part (threaded spindle 17) and the turning lever (12) is coupled by way of a first friction coupling (helical spring 24) with the turnable screwing part (threaded spindle 17); in which case the turnable screwing part (threaded spindle 17) is coupled by way of a one-way coupling (helical spring 37), jamming in the turning direction of said screwing part for the purpose of brake bleeding, and in series therewith by way of a turning stop with a part held in a torsionally secure manner, the friction coupling being designed so that it is stronger than the no-load resistance in the unjamming direction of the one-way coupling; in which case the screwing part (nut 33) which is not capable of being turned is articulated on a brake gear part (brake caliper brake lever 4) such that it is not capable of being turned and that it transmits axial force; in which case following the actuation of the auxiliary force motor (14) the brake force motor (6) firmly clamps the vehicle friction brake and in which case at the end of the braking at the same time or after the effect of the actuation of the brake force motor (6) has died down, the auxiliary force motor (14), when the effect of its actuation dies down, by means of the adjusting element (threaded spindle 17, nut 33, 34), readjusts the length of the air play adjuster (10) in the sense of the air of the vehicle friction brake until the desired air play is achieved, characterised by the combination of features according to which the turning lever (12) is pivoted on the turnable screwing part (threaded spindle 17) and is coupled with said screwing part (threaded spindle 17) by way of a first one-way coupling (helical spring 24) which jams in the turning direction for the purposes of brake application and which bridges the first friction coupling (helical spring 24); the second one-way coupling (helical spring 37), which jams the turnable screwing part (threaded spindle 17) in the latter's turning direction for the purpose of brake bleeding, is bridged by a second friction coupling (helical spring 37) and the turning stop (cross pin 41, cross groove 42), which is provided in series hetero and which, if need be, leads to the second screwing part (nut 33), is subject to play, each friction coupling being designed so that it is stronger than the no-load resistance in the unjamming direction of the one-way coupling which in each case is not bridged by it and the turning play (x) of the turning stop (cross pin 41, cross groove 42) corresponds to a screw lift of the helical gear (threaded spindle 17, nut 33, 34) corresponding to the desired air play; and the turnable screwing part (threaded spindle 17) is articulated on the other brake gear part (brake caliper lever 4) such that it is capable of being turned and that it transmits axial force.

2. Brake gear according to claim 1, characterised in that the first one-way coupling and the first friction coupling have a common first helical spring (24) which is wound at least approximately free from play, which rests with radial initial tension against cylinder surfaces (19, 22) of the turning lever (12) and of the turnable screwing part (threaded spindle 17), said surfaces projecting through or overlapping it, in each case, at least approximately half-way along its longitudinal extension, and the winding direction of which is chosen so that its radial contact pressure against the cylinder surfaces (19, 22) is reinforced when the turning lever (12) is turned in the sense of brake application.

3. Brake gear according to claim 1 or 2, characterised in that the second one-way coupling and the second friction coupling have a common second helical spring (37) which is wound at least approximately free from play, which rests with radial initial tension against a cylinder surface (36), which overlaps or penetrates it, of the turnable screwing part (nut 33) or of an intermediate part concentric to the latter and the one end of which is guided in an axially displaceable manner so that it is not capable of being turned on, in each case, the other part — the intermediate part (pin 39) or the turnable screwing part —, the winding direction being chosen so that its radial contact pressure against the cylinder surface (36) is weakened when the turnable screwing part (threaded spindle 17) is turned in the sense of brake application, and that the intermediate part (pin 39) is pivoted and is coupled with the part (nut 33), which is held in a torsionally secure manner, by way of the turning stop (cross pin 41, cross groove 42).

4. Brake gear according to claim 2 and 3, characterised in that the two helical springs (24, 37), as known per se, are wound from steel wire which in cross-section is square or rectangularly shaped and that the second helical spring (37) is developed so that it is smaller and weaker than the first helical spring (24).

5. Brake gear according to claim 4, characterised in that the second helical spring (37) has, at the end-side of its axially displaceable guide which is not capable of being turned, a radial off-set (38) which in a displaceable manner engages in a longitudinal groove (40) on the intermediate part (pin 39), assigned to this helical spring end, or the turnable screwing part.

6. Brake gear according to one or several of the claims 1 to 5, characterised in that the second one-way coupling (helical spring 37) has a limited jamming torque which may be overcome by arbitrary turning of the turnable screwing part.

7. Brake gear according to one or several of the claims 1 to 6, characterised in that the first helical spring (24) is coupled on the side of the turning lever (12) with a turning device (sleeve 28) which may be turned arbitrarily and on the other side in a torsionally secure manner with the turnable screwing part (threaded spindle 17).

8. Brake gear according to claim 7, characterised in that the cylinder surfaces (19, 22) penetrate the first helical spring (24) and the turning device is a tube part (sleeve 28) which overlaps the first helical spring (24) and which may be turned arbitrarily.

9. Brake gear according to one or several of the claims 1 to 8, characterised in that the turnable screwing part is the threaded spindle (17) which close to its two ends has opposed threaded sections (29, 30), each of which is screwed with a nut (33, 34), of which one (33) is articulated, so that it is not capable of being turned, on the one brake gear part (brake caliper brake lever 4) and the other (34) is articulated, so that it is not capable of being turned, on the other brake gear part (brake caliper brake lever 4), in which case, when the brake gear is developed as a brake caliper (5), the points of articulation are located in the central area of the two brake caliper brake levers (4).

10. Brake gear according to claims 8 and 9, characterised in that a tube part (sleeve 28, 56), in each case, extends from the turning lever (12), which is mounted on the threaded spindle (17) substantially in the centre, to the two nuts (33′, 34′), which both have a closed end cap (55) and upon which the tube parts (sleeve 28, 56) are pivoted in a sealed and axially displaceable manner, and that the one tube part (sleeve 28), at the same time forming the turning device, is pivoted, on the other hand, on the turning lever (12) in a sealed manner (Figure 8).

11. Brake gear according to one or several of the claims 7 to 10, characterised in that a parking brake force motor is coupled with the adjusting element parallel to the auxiliary force motor (14).

12. Brake gear according to claim 11, characterised in that the parking brake force motor is coupled by way of a stop coupling with play, which corresponds at least to the height of lift of the auxiliary force motor (14) for overcoming the desired air play, with the turning lever (12).

13. Brake gear according to one of the claims 7 to 10 in the case of which a parking brake force motor is provided, coupled parallel to or in series with the brake force motor (6) with at least one of the brake gear parts, characterised in that the thread or threads (31, 32) of the helical gear (threaded spindle 17, nut 33, 34) is or are developed in a non self-locking manner.

14. Brake gear according to one or several of the claims 1 to 13, characterised in that the brake force motor (6) and the auxiliary force motor (14) are connected to the same controlable source of energy, the auxiliary force motor (14) being developed so that it responds with a smaller supply of energy than the brake force motor (6).

15. Brake gear according to one or several of the claims 1 to 14, characterised in that the brake force motor (6) and the auxiliary force motor (14) are developed as compressed-air cylinders and, if need be, the parking brake force motor is developed as a spring-loaded brake cylinder.

16. Brake gear according to one or several of the claims 1 to 13, characterised in that provided for the brake force and the auxiliary force motor there is a common source of force from which at the start of braking the actuating force and the actuating lift are derived for the purpose of driving the adjusting element by way of an intermediate member, which limits the height of lift or the actuating force and which can be developed as a connecting link guide, spring member or the like, and which source following this delivers the clamping force and the clamping lift for the vehicle friction brake.

17. Brake gear for vehicle friction brakes having a longitudinally variable air play adjuster, which is arranged between two brake gear parts and which may be loaded by the brake clamping force, which may be exerted by a brake force motor, under tension or pressure, more particularly brake caliper for rail vehicle disk brakes with drawbar developed as an air play adjuster, in which case the air play adjuster has an adjusting element, which, when desired air play is exceeded, may be driven by means of an auxiliary force motor, for reducing the air play to the desired air play, according to the characterising features of one or several of the claims 1 to 10, characterised in that the auxiliary force motor is developed as a parking brake force motor, if need be, as a spring-loaded brake cylinder.

**Revendications**

1. Tringlerie de frein pour des freins à friction de véhicules, avec un dispositif de rattrapage de jeu (10) disposé entre deux éléments de la tringlerie (leviers de frein de l'étrier de frein 4), susceptible d'être chargée en traction ou en pression par la force de serrage du frein pouvant être exercée à partir d'un moteur (6) fournissant la force de freinage et dont la longueur est susceptible d'être modifiée, en particulier étrier de frein (5) pour des freins à vis pour véhicules sur rails (disque de frein 1, mâchoires de frein 3) avec un tirant (11) réalisé sous la forme d'un dispositif de rattrapage de jeu (10) du type dans lequel, .

- le dispositif de rattrapage de jeu (10) comporte un organe de rattrapage de jeu (broche filetée 17, écrou 33, 34) susceptible d'être entraîné, lors d'un dépassement d'un jeu de consigne, par un moteur de force auxiliaire (14) susceptible d'être commandé, au début du freinage, en avance par rapport au moteur de la force de freinage (6), en vue de réduire le jeu au jeu de consigne, lequel organe de rattrapage de jeu modifie la longueur du dispositif de rattrapage de jeu (10) dans le sens de la diminution du jeu jusqu'à l'application du frein à friction du véhicule, et comporte une transmission par vis avec une broche filetée (17) et un écrou (33, 34) susceptible d'être vissé sur celle ci,

- l'un des deux éléments de la transmission par vis (la broche filetée 17) est guidé en rotation par le moteur de force auxiliaire (14) et l'autre élément de vissage (écrou 33, 34) est guidé sans pouvoir tourner,

- le moteur de force auxiliaire (14) attaque un levier tournant (12) tourilloné sur un élément qui est accouplé, sans pouvoir tourner, à l'élément de vissage tournant (broche filetée 17), alors que le levier tournant (12) est accouplé, par l'intermédiare d'un premier accouplement à friction (ressort hélicoïdal 24), à l'élément de vissage tournant (broche filetée 17),

- l'élément de vissage tournant (broche filetée 17) est accouplé, par l'intermédiaire d'un accouplement à simple effet (ressort hélicoïdal 37) se fermant, pour le desserrage du frein dans le sens de la rotation dudit élément, et en série avec un accouplement par l'intermédiaire d'une butée de rotation, avec un élément empêché de tourner, l'accouplement à friction étant plus fort que la résistance en marche à vide dans le sens de l'ouverture de l'accouplement à simple effet,

- l'élément de vissage empêché de tourner (écrou 33) est accouplé à un élément de tringlerie (levier de frein 4 de l'étrier de frein) sans pouvoir tourner, mais capable de transmettre des forces axiales,

- après la commande du moteur de force auxiliaire (14), le moteur de force de freinage (6) serre fortement le frein à friction du véhicule, alors qu'à la fin du freinage et en même temps ou après la commande du moteur de force de freinage (6), le moteur de force auxiliaire (14) ramène à la cessation de sa commande et à l'aide de l'organe de rattrapage de jeu (broche filetée 17, écrou 33, 34), la longueur du dispositif de réglage de jeu (10), dans le sens du dégagement du frein à friction du véhicule, jusqu'à ce que le jeu de consigne soit atteint, remarquable par la combinaison des caractéristiques suivantes,

-- le levier tournant (12) est monté à rotation sur l'élément de vissage tournant (broche filetée 17) et il est accouplé à ce dernier par l'intermédiaire d'un premier accouplement à simple effet (ressort hélicoïdal 24) se resserrant dans le sens de rotation qui correspond à l'application du frein et monté en parallèle sur le premier accouplement a friction (ressort hélicoïdal 24),

-- le second accouplement à simple effet (ressort hélicoïdal 37) qui bloque l'élément de vissage tournant (broche filetée 17) dans son sens de rotation qui correspond au dégagement du frein, est ponté par un second accouplement à friction (ressort hélicoïdal 37), et la butée de rotation (cheville transversale 41, gorge transversale 42) qui est prévue en série avec de dernier, et menant éventuellement au second élément de vissage (écrou 33), est affectée d'un jeu, chaque accouplement à friction étant plus fort que la résistance en marche à vide dans le sens de l'ouverture de l'accouplement à simple effet qui ne lui est pas monté en parallèle, et le jeu angulaire (x) de la butée de rotation (cheville tournante 41, gorge transversale 42) correspondant à une course de vissage de la transmission par vissage (broche filetée 17, écrou 33, 34), qui correspond au jeu de consigne, et

-- l'élément de vissage tournant (broche filetée 17) est articulé à l'autre élément de tringlerie (levier de frein 4 de l'étrier de frein) de façon à ne pas pouvoir tourner et à pouvoir transmettre des forces axiales.

2. Tringlerie de frein selon la revendication 1, caractérisée par le fait que le premier accouplement à simple effet et le premier accouplement à friction comportent un ressort hélicoïdal commun (24) enroulé au moins approximativement sans jeu, ledit ressort portant avec une tension radiale préalable contre des surfaces cylindriques (19, 22) du levier tournant (12) et de l'élément de vissage tournant (broche filetée 17) qui le traverse ou qui passe sur lui à peu près sur la moitié de sa longueur, et dont la direction angulaire est choisie de manière à provoquer un accroissement de son application contre les surfaces cylindriques (19, 22), lors de la rotation du levier tournant (12) dans le sens de l'application du frein.

3. Tringlerie de frein selon la revendication 1 ou 2, caractérisée par le fait que le second accouplement à simple effet et le second accouplement à friction possèdent un second ressort hélicoïdal commun (37), enroulé à peu près approximativement sans jeu, lequel ressort hélicoïdal porte, avec une tension radiale préalable sur une surface cylindrique (36), qui passe sur lui et qui la traverse, de l'élément de vissage tournant (33) ou contre un élément intermédiaire concentrique à ce dernier, et dont une extrémité est guidée, de façon à être axialement déplaçable, mais sans pouvoir tourner, sur respectivement l'autre élément de l'élément intermédiaire (cheville 39) ou de l'élément de vissage tournant, la réalisation étant telle que le sens de l'enroulement est choisi pour provoquer un affaiblissement de son application radiale contre la surface cylindrique (36), lors de la rotation de l'élément de vissage tournant (broche filetée 17) dans le sens de l'application du frein, alors que l'élément intermédiaire (cheville 39) est monté à rotation et est accouplé, par l'intermédiaire de la butée de rotation (cheville transversale 41, gorge transversale 42), avec l'élément (écrou 33) qui est empêché de tourner.

4. Tringlerie de frein selon la revendication 2 ou 3, caractérisée par le fait que les deux ressorts hélicoïdaux sont, de façon connue, enroulés avec un fil d'acier de section transversale carrée ou rectangulaire, et que le second ressort hélicoïdal (37) est plus petit et plus faible que le premier ressort hélicoïdal (24).

5. Tringlerie de frein selon la revendication 4, caractérisée par le fait que le second ressort hélicoïdal (37) comporte du côté de l'extrémité de son guidage axialement mobile, sans pouvoir tourner, une partie rabattue (38) qui pénètre, de façon déplaçable, dans une gorge longitudinale (40) ménagée dans l'élément intermédiaire (cheville 39) qui est associé à cette extrémité du ressort hélicoïdal ou dans l'élément de vissage qui est capable de tourner.

6. Tringlerie de frein selon une ou plusieurs des revendications 1 à 5, caractérisée par le fait que le second accouplement à simple effet(ressort hélicoïdal 37) comporte un couple de fermeture limité, susceptible d'être surmonté par une rotation intentionnelle de l'élément de vissage tournant.

7. Tringlerie de frein selon une ou plusieurs des revendications 1 à 6, caractérisée par le fait que le premier ressort hélicoïdal (24) est accouplé, du côté du levier tournant (12), avec un dispositif de rotation (douille 28) susceptible d'être entraîné intentionnellement en rotation et, accouplé, de l'autre côté, de façon fixe en rotation, avec l'élément de vissage tournant (broche filetée 17).

8. Tringlerie de frein selon la revendication 7, caractérisée par le fait que les surfaces cylindriques (19, 22) traversent le premier ressort hélicoïdal (24), et que le dispositif de rotation est constitué par un élément tubulaire (douille 28) passant par le premier ressort hélicoïdal (24) et susceptible d'être entraîné intentionnellement en rotation.

9. Tringlerie de frein selon une ou plusieurs des revendications 1 à 8, caractérisée par le fait que l'élément de vissage tournant est constitué par la broche filetée (17) qui comporte, près de ses deux extrémités, des sections filetées (29, 30) de sens opposé, et sur chacune desquelles est vissé un écrou (33, 34) dont le premier (33) est articulé, de manière à ne pas pouvoir tourner, à l'un des leviers de la tringlerie de frein (levier de frein 4 de l'étrier de frein) et dont l'autre (34) est articulé, sans pouvoir tourner, à l'autre élément de tringlerie de frein (levier de frein 4 de l'étrier de frein), la réalisation étant telle que lorsque la tringlerie de frein est réalisée sous la forme d'un étrier de frein (5), les points d'articulation se trouvent dans la partie médiane des deux leviers de frein (4) de l'étrier de frein.

10. Tringlerie de frein selon les revendications 8 et 9, caractérisée par le fait qu'à partir du levier tournant (12) qui est monté à peu près au milieu de la broche filetée (17) s'étendent respectivement des éléments tubulaires (douille 28, 56) vers respectivement les deux écrous (33', 34') dont chacun comporte un capot d'extrémité fermé (55), écrous sur lesquels les éléments tubulaires (douille 28, 56) sont tourillonnés de façon étanche et montés de façon à être déplaçables axialement, et que l'un des éléments tubulaires (douille 28) qui forme en même temps le dispositif de rotation, est par ailleurs monté de façon étanche et de façon à pouvoir tourner sur le levier tournant (12) (figure 8).

11. Tringlerie de frein selon une ou plusieurs des revendications 7 à 10, caractérisée par le fait qu'en parallèle sur le moteur de force auxiliaire (14) est accouplé un moteur de force de freinage de stationnement, avec organe de rattrapage de jeu.

12. Tringlerie de frein selon la revendication 11, caractérisée par le fait que le moteur de la force de freinage de stationnement est accouplé au levier tournant (12) par l'intermédiaire d'un accouplement de butée comportant un jeu qui correspond au moins à la course du moteur de force auxiliaire (14) pour surmonter le jeu de consigne.

13. Tringlerie de frein selon l'une des revendications 7 à 10, du type dans lequel il est prévu en parallèle ou en série avec le moteur de force de freinage (6) un moteur de force de freinage de stationnement accouplé à au moins l'un des éléments de tringlerie, caractérisée par le fait que le ou les filets (31, 32) de la transmission par vissage (broche filetée 17, écrou 33, 34) est ou sont réalisés de façon non auto-bloquante.

14. Tringlerie de frein selon une ou plusieurs des revendications 1 à 13, caractérisée par le fait que le moteur de force de freinage (6) et le moteur de force auxiliaire (14) sont reliés à la même source d'énergie réglable, le moteur de force auxiliaire (14) étant réalisé pour répondre à une alimentation plus faible en énergie que celle du moteur de la force de freinage (6).

15. Tringlerie de frein selon une ou plusieurs des revendications 1 à 14, caractérisée par le fait que le moteur de force de freinage (6) et le moteur de force auxiliaire (14) sont réalisés sous la forme de cylindres à air comprimé et qu'éventuellement le moteur de force de freinage de stationnement est réalisé sous la forme d'un cylindre de frein à ressort à accumulation.

16. Tringlerie de frein selon une ou plusieurs des revendications 1 à 13, caractérisée par le fait qu'il est prévu, pour le moteur de force de freinage et pour le moteur de force auxiliaire une source de force commune à partir de laquelle, au début du freinage, la force de commande et la course de commande pour l'entraînement de l'organe de réglage, sont dérivées d'un élément intermédiaire qui limite la course ou la force de commande et qui peut être réalisé sous la forme d'un guide de coulisse, d'un élément élastique ou similaire, ladite source commune fournissant ensuite, à cet effet, la force de serrage et la course de serrage pour le frein à friction du véhicule.

17. Tringlerie de frein pour des freins à friction pour véhicules, avec un dispositif de rattrapage de jeu disposé entre deux éléments de la tringlerie, susceptible d'être chargée en traction ou en pression par la force de serrage du frein qui est susceptible d'être exercée par un moteur de force de freinage, et susceptible de modifier sa longueur, en particulier étrier de frein pour des freins à disque pour véhicules sur rails avec une tige de traction réalisée sous la forme d'un dispositif de rattrapage de jeu, du type dans lequel le dispositif de rattrapage de jeu comporte, pour réduire le jeu au jeu de consigne, un organe de rattrapage de jeu susceptible d'être commandé par un moteur de force auxiliaire, lors du dépassement du jeu de consigne, selon les moyens caractéristiques d'une ou de plusieurs des revendications 1 à 10, caractérisée par le fait que le moteur de force auxiliaire est réalisé sous la forme d'un moteur de force de freinage de stationnement, éventuellement sous la forme d'un cylindre de frein à ressort à accumulation.

Fig. 1

Fig. 3

Fig. 2

Fig. 4

Fig. 5

Fig. 6

Fig. 7

Fig. 8

Fig. 9

0 132 601